Europäisches Patentamt

European Patent Office

Office européen des brevets

(19)

(11) Numéro de publication: **0 036 824**
**B1**

(12) **FASCICULE DE BREVET EUROPEEN**

(45) Date de publication du fascicule du brevet: **10.12.86**

(51) Int. Cl.⁴: **A 47 C 1/025,** B 60 N 1/06

(21) Numéro de dépôt: **81400461.0**

(22) Date de dépôt: **24.03.81**

(54) **Perfectionnements aux sièges à dossier réglable en inclinaison.**

(30) Priorité: **26.03.80 FR 8006769**

(43) Date de publication de la demande:
**30.09.81 Bulletin 81/39**

(45) Mention de la délivrance du brevet:
**10.12.86 Bulletin 86/50**

(84) Etats contractants désignés:
**BE DE GB IT NL SE**

(56) Documents cités:
**EP-A-0 029 763**
**DE-A-2 642 091**
**DE-A-2 735 522**
**US-A-2 430 604**

(73) Titulaire: **SOCIETE INDUSTRIELLE BERTRAND FAURE**
**Brières les Scellés**
**F-91150 Etampes (FR)**

(72) Inventeur: **Boisset, Bernard**
**4, Clos de Montfaucon**
**F-91150 Etampes (FR)**

(74) Mandataire: **Behaghel, Pierre et al**
**CABINET PLASSERAUD 84 rue d'Amsterdam**
**F-75009 Paris (FR)**

Courier Press, Leamington Spa, England.

## Description

L'invention est relative aux sièges à dossiers réglables en inclinaison, notamment pour véhicules.

En général les dossiers de ces sièges sont montés pivotants autour d'un axe transversal disposé dans la zone inférieure arrière du siège et des moyens sont prévus pour verrouiller le dossier en un certain nombre de positions angulaires distinctes autour de cet axe.

Cette solution exige le recours à des pièces (arbres, paliers, pions ...) qui doivent être usinées avec précision et doivent présenter une résistance mécanique élevée en vue d'encaisser les efforts concentrés au voisinage de l'axe: ces pièces sont donc relativement coûteuses.

Une telle solution n'étant pas applicable aux sièges dont au moins l'ossature d'assise est constituée par une coque, la demanderesse a tout dernièrement eu l'idée de réaliser l'articulation du dossier, dans ce cas particulier, à l'aide d'éléments de glissières curvilignes complémentaires centrés sur un même axe transversal avantageusement situé au voisinage de l'axe de pivotement des hanches de la personne assise sur le siège, lesdits éléments étant portés, de chaque côté du siège, respectivement par les portions arrière d'ailes verticales de la coque d'assise et par les bases de joues latérales verticales du dossier.

Les éléments de glissières en question étaient alors constitués essentiellement par des rainures et nervures concentriques formant respectivement des creux et des saillies sur lesdites ailes et pattes.

Ce dernier principe de construction présente des avantages notables (légèreté, simplicité de la fabrication, économie ...) du fait notamment de la répartition des efforts sur des surfaces de portage circulaires relativement étendues.

Il permet en outre de supprimer l'axe d'articulation hibituel et le "point dur" que sa présence crée fréquemment à l'arrière du coussin d'assise.

Il se prête par ailleurs à une commande relativement facile du réglage de l'inclinaison du dossier par coopération d'au moins une crémaillère courbe centrée sur l'axe transversal des glissières et solidaire de l'une des deux ossatures avec au moins un organe denté rotatif facilement commandable par la personne assise et monté sur l'autre ossature.

La présente invention a pour but d'appliquer le principe de construction ci-dessus aux sièges dont les ossatures d'assise et de dossier de présentent sous la forme générale de cadres constitués d'éléments d'armature métalliques.

Elle se rapport plus particulièrement à ceux, des sièges du genre en question, dont l'ossature du dossier comprend deux profilés métalliques incurvés disposés respectivement des deux côtés du dossier, prolongeant chacun vers le bas et vers l'avant la base de l'un des côtés de ce dossier et centrés sur un même axe transversal horizontal situé au voisinage de l'axe de pivotement des hanches de la personne assise sur le siège, ces profilés étant propres à coopérer par emboîtement coulissant avec des organes de guidage de l'assise et des moyens étant prévus pour régler les positions relatives des profilés par rapport aux organes de guidage et pour les bloquer en une pluralité de positions mutuelles distinctes.

Dans les modes de réalisation connus de tels sièges, constituant des chaises de bureau, les profilés sont constitués par des tubes recourbés et les organes de guidage sont constitués, pour chaque tube, par deux paires de galets (voir DE—A—26 42 091).

Une telle construction n'est pas assez robuste pour être appliquée à un siège de véhicule.

Selon l'invention, les organes de guidage sont constitués par deux profilés métalliques incurvés faisant partie de l'ossature d'assise et centrés sur l'axe transversal ci-dessus et des fourrures constituées en un matériau présentant un faible coefficient de frottement et une bonne résistance à l'usure sont interposées entre les profilés mutuellement coulissants du dossier et de l'assise.

Dans des modes de réalisation préférés, on a recours en outre à l'une et/ou à l'autre des dispositions suivantes:

— l'une des profilés incurvés mutuellement emboîtés présente en section droite une forme enveloppante propre à entourer l'autre profilé sur plus de la moitié de son pourtour, et de préférence sur au moins les trois quarts de son pourtour,

— l'étendue angulaire des tronçons mutuellement emboîtés des profilés est comprise entre 45 et 90°, étant de préférence de l'ordre de 60°,

— la longueur du tronçon de courbe constitué par la section droite de la surface de contact mutuel de deux profilés mutuellement emboîtes est petite par rapport à la dimension longitudinale de ladite surface de contact, cette longueur étant de préférence au moins deux fois plus petite que cette dimension longitudinale.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

La figure 1, de ces dessins, est une vue perspective d'un siège de véhicule selon l'invention dont les deux ossatures d'assise et de dossier sont ici séparées l'une de l'autre.

Les figures 2 et 3 montrent le même siège avec ses deux ossatures montées l'une sur l'autre respectivement en vue latérale, portions coupées selon II—II figure 3, et en coupe transversale selon III—III figure 2.

Les figures 4 et 5 montrent une variante de siège selon l'envention, avec encore ses deux ossatures montées l'une sur l'autre, respectivement en vue latérale, portions couplées selon IV—IV figure 5, et en coupe transversale selon V—V figure 4.

Dans chaque cas,

— l'ossature d'assise est un cadre constitué par deux flasques métalliques verticaux 1 d'allure générale triangulaire effilée vers l'avant et entre-troisés transversalement par deux tubes horizontaux 2, 3,

— et l'ossature de dossier comprend un arceau 4 dont les deux jambes peuvent être reliées par une entretoise horizontale transversale 5.

On agence en outre certains éléments constitutifs de ces deux ossatures de façon telle qu'ils forment, de chaque côté du siège, une paire de profilés métalliques incurvés appartenant respectivement à l'ossature d'assise et à l'ossature de dossier et emboîtables l'un dans l'autre aux fins de glissement mutuel, ces profilés étant centrés sur un même axe horizontal transversal X.

Cet axe X n'est disposé:

— ni dans la zone arrière basse du siège, comme les axes des articulations classiques,

— ni dans la zone, relativement haute et avancée, où se trouve le centre de courbure de l'arc de cercle passant respectivement par l'extrémité avant de l'assise, par le fond arrière de cette assise et par le sommet du dossier.

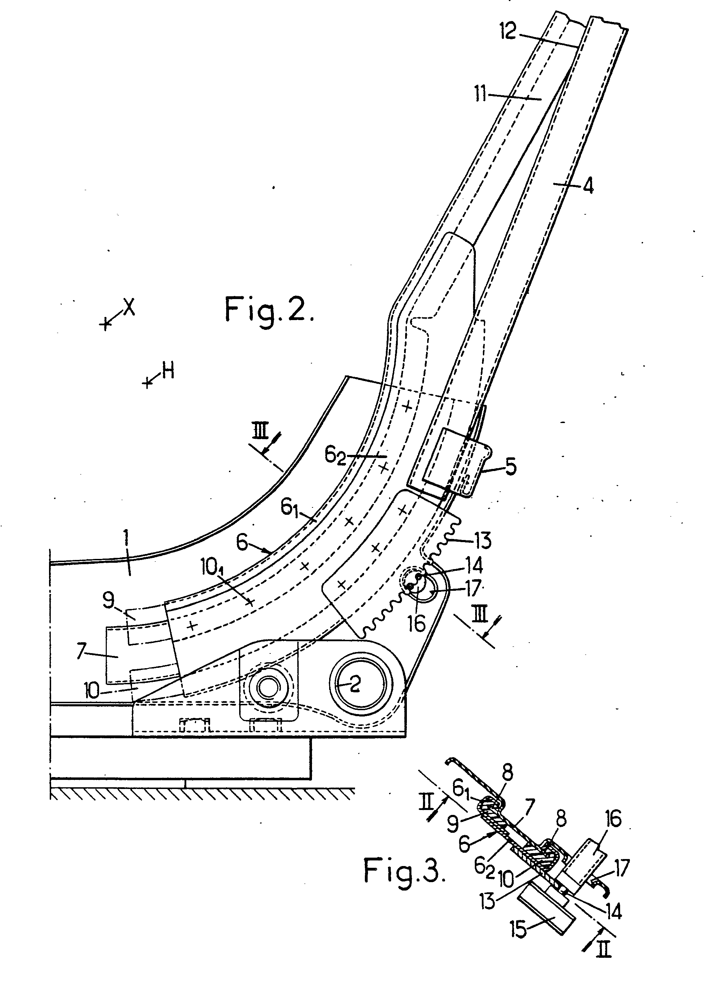

Ledit axe X est ici disposé au voisinage de l'axe de pivotement H des hanches de l'usager du siège (voir figure 2).

A titre illustratif, cet axe X est situé à une hauteur de l'ordre de 12 à 15 cm au-dessus du point le plus bas de la zone médiane de la surface de portage du coussin d'assise et à une distance horizontale de l'ordre de 15 à 20 cm en avant de la base de la zone médiane de la surface de portage du coussin du dossier.

L'intérêt présenté par le positionnement ainsi défini de l'axe X sera expliqué plus loin.

L'un des deux profilés incurvés de chaque paire est prévu de façon à envelopper l'autre sur plus de la moitié de son pourtour de façon telle qu'après le début de leur emboîtement mutuel, ces profilés ne puissent plus subir, l'un par rapport à l'autre, que des coulissement relatifs "circulaires", c'est-à-dire pour lesquels chaque point mobile se déplace selon un arc de cercle centré sur l'axe X.

Pour les diverses positions de réglage, la portion mutuellement emboîtée des profilés incurvés correspond à un arc de cercle d'axe X relativement grand, cet arc étant généralement compris entre 45 et 90° et de préférance de l'ordre de 60°.

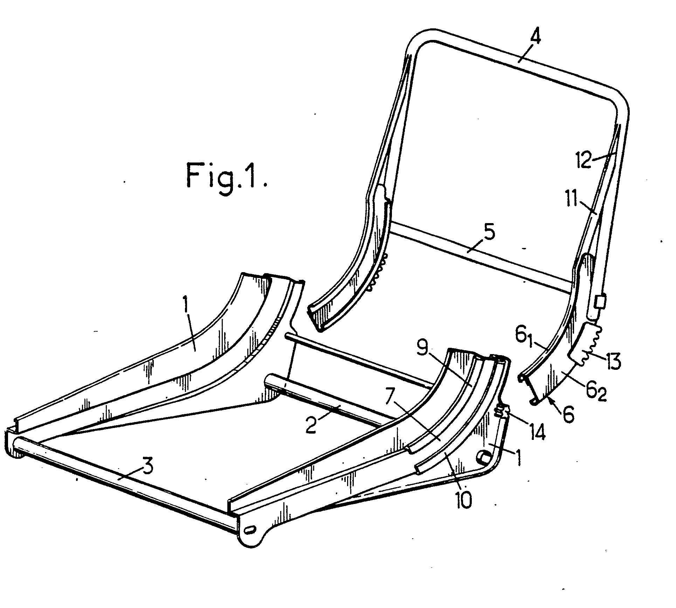

Dans le premier mode de réalisation illustré sur les figures 1 à 3, l'un des profilés 6, lié à l'ossature de dossier, est une gouttière présentant un profil en C relativement fermé.

L'autre profilé, dont le profil présente la forme générale d'un T, est constitué par un ressaut plat 7 s'étendant selon une portion de disque et faisant saillie sur l'un des flasques 1, ce ressaut étant réalisé par emboutissage dudit flasque et étant lui-même prolongé radialement, aussi bien en direction de l'axe X que dans la direction inverse, par des pattes 8 (figure 3) crevées dans les zones de raccordement dudit ressaut au reste du flasque.

Les deux séries de pattes coplanaires 8 ainsi formées sont elles-mêmes coiffées à demeure par des fourrures 9, 10 constitués en une matière plastique ou autre présentant un faible coefficient de forttement et une bonne résistance à l'usure.

Ce sont les deux fourrures 9 et 10 montées sur chaque ressaut 7 qui sont jointivement emboîtés à l'intérieur de la gouttière 6, ou plus précisément c'est cette dernière qui vient chevaucher jointivement lesdits joncs lors de l'emboîtement mutuel des deux profilés.

La gouttière 6 est avantageusement constituée par deux pièces courbes $6_1$, $6_2$ centrées sur l'axe X, soudées l'une sur l'autre aux points $10_1$ et présentant chacune une section droite en J.

L'une de ces pièces $6_1$, en forme de baguette relativement étroite, comporte un prolongement rectiligne supérieur 11 orienté vers le haut et vers l'arrière et formant avec ladite pièce une sorte de faucille étirée.

L'extrémité supérieure de ce prolongement 11 ist biseautée en 12 et soudée sur l'arceau 4 en une zone haute de ce dernier.

L'autre pièce $6_2$, plus large que la pièce $6_1$, se présente sous la forme générale d'une joue verticale à bord arrière rabattu et sa portion supérieure est soudée non seulement sur la pièce $6_1$ et sur le bas de son prolongement supérieur 11, mais aussi sur le bas d'une jambe de l'arceau 4.

L'ensemble triangulé rigide ainsi formé présente une grande résistance aux déformations.

Le montage de l'ossature de dossier sur l'ossature d'assise est effectué en faisant d'abord coïncider les axes des profilés 6 et 7, puis en emmanchant en bout "circulairement" les extrémités inférieures des gouttières 6 du dossier sur les extrémités supérieures des profilés 7 en T de l'assise de façon telle que chaque gouttière 6 enveloppe jointivement les deux fourrures 9 et 10 coiffant un ressaut 7 en pouvant glisser le long de celles-ci.

Si aucune butée intermédiaire n'est prévue, l'ossature de dossier ainsi emboîtée sur l'ossature d'assise vient par gravité occuper sa position inférieure d'emboîtement maximum, position correspondant à l'inclinaison maximum du dossier sur la verticale et au contact mutuel de portées de fin de course prévues respectivement sur les profilés et/ou sur les ossatures.

En réalité, le degré de l'emboîtement mutuel en question est limité et réglé à volanté à l'aide d'un mécanisme de réglage et de verrouillage qui va être maintenant décrit.

Du fait de l'emplacement particulier indiqué ci-dessus pour l'axe X, ce réglage du degré d'emboîtement "circulaire" mutuel des profilés courbes se traduit par un réglage de l'inclinaison du dossier autour de cet axe X, entraînant une modification naturelle de l'inclinaison du dos de la personne assise autour de ses hanches, et non pas par un simple raccourcissement ou allongement du dossier sans modification substantielle de son inclinaison d'ensemble.

Le mécanisme de réglage et de verrouillage considéré comprend:

— au moins une crémaillère 13 s'étendant selon un arc de cercle centré sur l'axe X et solidaire de l'un des deux profilés courbes,

— un organe denté rotatif 14 porté par l'ossature solidaire de l'autre profilé courbe et propre à coopérer avec la crémaillère 13, les rotations de cet organe étant commandées par une manette (non représentée) facilement accessible de la personne assise sur le siège, manette dont les rotations sont elles-mêmes transmises de toute manière désirable à une roue 15 (figure 3) solidaire dudit organe 14,

— et des moyens pour bloquer l'organe denté 14 en une pluralité de ses positions angulaires correspondant à autant d'inclinaisons différentes du dossier.

Dans le mode de réalisation illustré, le nombre des crémaillères circulaires 13 est égal à deux et ces crémaillères sont constituées par des plaquettes métalliques découpées soudées sur les joues verticales des pièces $6_2$ de façon telle que leurs dents soient orientées vers le bas et vers l'arrière, alors que les organes dentés 14, au nombre de deux également, sont solidaires d'une même barre rigide transversale 16 portée par l'ossature d'assise, à l'arrière de celle-ci, et terminée à ses deux extrémités par les roues 15.

Les organes dentés 14 peuvent présenter toute forme désirable: c'est ainsi qu'ils peuvent être constitués par des pignons associés à des moyens de verrouillage angulaire.

Dans la construction illustrée, ces organes dentés 14 sont constitués chacun par deux pions cylindriques identiques d'axes parallèles à l'axe X et symétriques l'un de l'autre par rapport à l'axe de la barre 16, pions propres à coagir avec les dents des crémaillères 13.

De plus, la barre 16 est montée de façon à pouvoir rouler et glisser jointement dans deux lumières 17 évidées respectivement dans les deux flasques 1 et allongées radialement par rapport à l'axe X, et des ressorts (non représentés) sont prévus pour solliciter constamment la barre 16 vers l'avant et vers le haut de façon à introduire les pions 14 au fond des encoches en regard des crémaillères correspondantes.

Dans ces conditions, au repos, tous les pions sont logés au fond de telles encoches et le mécanisme est verrouillé.

A partir d'une telle position de repos, les rotations de la manette de commande de la barre 16 se traduisent par des pivotements successifs de 180° de cette barre autour de chacun des couples de pions coaxiaux situés de chaque côté du siège, ces couples constituant à tour de rôle des tourillons fixes de pivotement pour ladite barre: à chacun de ces pivotement successifs correspond un coulissement de l'ossature de dossier vers le haut ou vers le bas, c'est-à-dire une réduction ou une augmentation de son inclinaison sur la verticale autour de l'axe X.

Ce mécanisme présente l'avantage d'assurer automatiquement un excellent verrouillage pour chacune de ses positions de réglage.

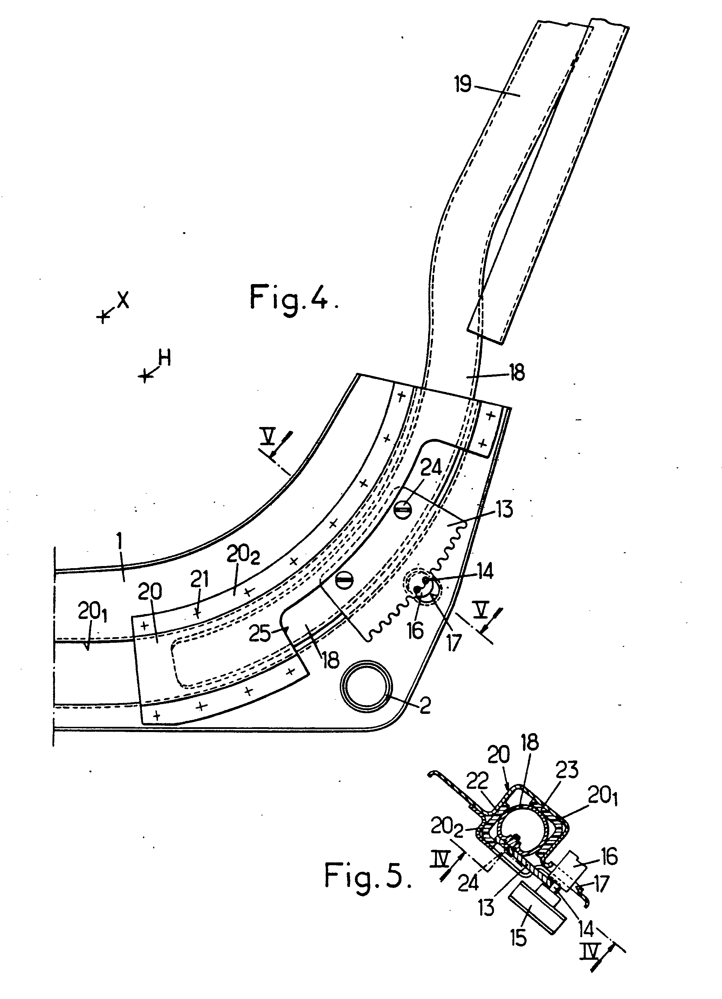

Dans la variante de construction représentée sur les figures 4 et 5, le profilé courbe faisant partie de l'ossature du dossier est constitué par un élément tubulaire 18 qui peut soit présenter un prolongement rectiligne supérieur 19 s'étendant vers le haut et vers l'arrière et soudé à l'arceau 4 comme le prolongement 11 ci-dessus, soit constituer lui-même un prolongement inférieur d'une jambe de cet arceau.

Le profilé courbe faisant partie de l'ossature d'assise est ici constitué par un tunnel curviligne 20 de section carrée.

Ce tunnel est lui-même composé d'une rigole curviligne $20_1$ de section droite rectangulaire emboutie dans un flasque 1 et d'un capot curvilgne $20_2$ présentant en section droite la forme d'un oméga majuscule aplati dont les ailes sont soudées par points 21 sur les bords de la rigole $20_1$.

Ce tunnel 20 est garni intérieurement de fourrures de glissement 22, 23 en forme de cornières curvilignes disposées dans deux coins opposés dudit tunnel, fourrures jouant ici le rôle des joncs 9 et 10 ci-dessus: les formes et épaisseurs de ces fourrures sont choisies de façon telles qu'elles offrent au tube 18 un contact glissant selon quatre plaques étroites s'étendant chacune selon un arc de cercle centré sur l'axe X.

On retrouve ici les plaques découpées 13 servant de crémaillères et propres à coopérer avec des pions 14 exactement comme dans le version précédente: chacune de ces plaques 13 est ici rapportée à l'aide de vis 24 sur une portion légèrement aplatie du tube 18 et chaque tunnel curviligne 20 est ajouré par une large fenêtre 25 livrant passage à la plaque-crémaillère 13 correspondante.

Il est à noter que, dans chaque cas, les profilés courbes mutuellement emboîtés remplissent un double rôle: ils servent à la fois de "coulisses" ou éléments de glissières propres à guider les déplacements du dossier, et d'éléments d'armature résistants consitutifs des ossatures ou cadres de dossier et d'assise.

Il s'ensuite une simplification et un allègement.

Dans chaque cas également, la surface de contact mutuel des profilés curvilignes mutuellement emboîtés s'étend circulairement sur un arc relativement étendu, généralement supérieur à 45° et par exemple de l'ordre de 60°, et sur une relativement grande longueur, la ligne moyenne des tronçons emboîtés des profilés mesurant généralement 15 à 25 cm, étant notamment de l'ordre de 20 cm.

Au contraire, la ligne correspondant à la section droite de ladite ossature de contact mutuel s'étend sur une longueur beaucoup plus faible, généralement inférieure à 10 cm et plutôt comprise entre 3 et 7 cm.

En d'autres termes, la section droite des profilés courbes considérés est relativement faible pour une surface de contact mutuel donnée, ce qui conduit toutes choses égales par ailleurs à un faible poids et à un faible prix de revient.

Il est à noter par ailleurs que la formule proposée permet de supprimer complètement l'arbre d'articulation habituel et donc de supprimer par le fait même les "points durs" qui correspondaient à la présence de cet arbre à la base arrière de l'assise: cette suppression permet de réaliser une matelassure de garnissage plus profonde dans cette zone.

**Revendications**

1. Siège à dossier réglable en inclinaison dont l'ossature du dossier comprend deux profilés métalliques incurvés (6) disposés respectivement des deux côtés du dossier, prolongeant chacun vers le bas et vers l'avant la base de l'un des côtés de ce dossier et centrés sur un même axe transversal horizontal (X) situé au voisinage de l'axe de pivotement (H) des hanches de la personne assise sur le siège, ces profilés étant propres à coopérer par emboîtement coulissant avec des organes de guidage de l'assise, et des moyens (13—17) étant prévus pour régler les positions relatives de profilés par rapport aux organes de guidage et pour les bloquer en une pluralité de positions mutuelles distinctes, caractérisé en ce que les organes de guidage sont constitués par deux profilés métalliques incurvés (7, 20) faisant partie de l'ossature de l'assise et centrés sur l'axe transversal ci-dessus (X) et en ce que des fourrures (9, 10; 22, 23) constituées en un matériau présentant un faible coefficient de frottement et une bonne résistance à l'usure sont interposées entre les profilés mutuellement coulissants du dossier at de l'assise.

2. Siège selon la revendication 1, caractérisé en ce que l'un des profilés incurvés mutuellement emboîtés (6, 20) présente en section droite une forme enveloppante propre à entourer l'autre profilé (7, 18) sur plus de la moitié de son pourtour, et de préférence sur au moins les trois. quarts de son pourtour.

3. Siège selon l'une quelconque des revendications 1 et 2, caractérisé en ce que l'étendue angulaire des tronçons mutuellement emboîtés des profilés est comprise entre 45 et 90°, étant de préférence de l'ordre de 60°.

4. Siège selon l'une quelconque des précédentes revendications, caractérisé en ce que la longueur du tronçon de courbe constitué par la section droite de la surface de contact mutuel de deux profilés mutuellement emboîtés est petite par rapport à la dimension longitudinale de ladite surface de contact, cette longueur étant de préférence au moins deux fois plus petite que cette dimension longitudinale.

**Patentansprüche**

1. Sitz mit neigungsverstellbarer Rückenlehne, bei dem das Gestell der Rückenlehne zwei gekrümmte metallische Profile (6) aufwiest, die an den beiden Seiten der Rückenlehne sich befinden und gegenüber der unteren Seite der Rückenlehne nach unten und vorn verlängert und auf eine gemeinsame horizontale Achse (X) zentriert sind, die in der Nähe der Schwenkachse (H) der Hüfte der Person liegt, die den Sitz benutzt, wobei die Profile geeignet sind, mittels ineinandergreifender Gleitführungen mit Führungselementen am Sitzteil zusammenzuwirken und wobei Mittel (13 bis 17) vorgesehen sind, die zum Einstellen der relativen Stellungen der Profile gegenüber den Führungselementen und zum Arretieren in einer Anzahl von bestimmten gegenseitigen Stellungen dienen, dadurch gekennziechnet, daß die Führungselemente aus zwei gekrümmten metallischen Profilen (7; 20) gebildet sind, die Teile des Gestells des Sitzteils darstellen und auf die vorgenannte horizontale Achse (X) zentriert sind, und daß zwischen den gleitend ineinandergreifenden Profilen der Rückenlehne und des Sitzteils Zwischenlagen (9, 10; 22, 23) aus einem Material mit niedrigem Reibungskoeffizienten und hoher Verschleißfestigkeit angeordnet sind.

2. Sitz nach Anspruch 1, dadurch gekennzeichnet, daß eines der ineinandergreifenden gekrümmten Profile (6, 20) im Querschnitt gesehen eine solche Forme hat, daß es das andere Profil (7, 18) auf mehr als der Hälfte, vorzugsweise auf wenigstens dreiviertel sines Umfanges umgibt.

3. Sitz nach Anspruch 1 oder 2, dadurch gekennzeichnet, daß der Winkelbereich der gegenseitig ineinandergreifenden Enden der Profile zwischen 45 und 90°, vorzugsweise in der Größenordnung von 60° liegt.

4. Sitz nach der Ansprüche 1 bis 3, dadurch gekennzeichnet, daß die Länge der gebogenen Abschnitte, die durch den Querschnitt der Berührungsoberfläche der beiden ineinandergreifenden Profile gebildet wird, klein ist im Vergleich zur Längsausdehnung der Berührungsoberfläche, wobei die Länge vorzugsweise wenigstens zweimal kleiner ist als die Längsausdehnung.

**Claims**

1. Seat with a tilt-adjustable back-rest whose back-rest framework comprises two incurved metal sectional bars (6) arranged respectively on each side of the back-rest, each extending at the base of one of the sides of this back-rest downwards and forwards and being centered on the same horizontal transverse axis (X) located in the vicinity of the pivoting axis (H) of the hips of the person sitting on the seat, these sectional bars being adapted to coact by sliding interfitting with guide members of the seat-bottom, and means (13—17) being provided to adjust the relative positions of the sectional bars with respect to the guide members and to lock them in a plurality of separate mutual positions, characterized in that the guide members are constituted by two incurved metal sectional bars (7: 20) forming part of the framework of the seat-bottom and centered on the aforementioned transverse axis (X) and in that liners (9, 10: 22, 23) constituted of a material having a low coefficient of friction and a good wear resistance are interposed between the mutually interfitted sectional bars of the back-rest and of the seat-bottom.

2. Seat according to claim 1, characterized in that one of the mutually interfitted incurved sectional bars (6, 20) has in cross-section an envelop- ping shape adapted to surround the other sectional bar (7, 18) over more than one half of its perimeter, and preferably over at least three quarters of its perimeter.

3. Seat according to any one of the claims 1 and 2, characterized in that the angular extent of the mutually interfitted sections of the sectional bars is comprised between 45° and 90°, being preferably of the order of 60°.

4. Seat according to any one of the preceding claims, characterized in that the length of the curved section constituted by the cross-section of the mutual contact surface of two mutually interfitted sectional bars is small with respect to the longitudinal dimension of said contact surface, said length being preferably at least twice as small as said longitudinal dimension.

Fig.1.

0 036 824

Fig.2.

Fig.3.

2

Fig.4.

Fig.5.